# FASCICULE DE BREVET EUROPEEN

(11) **EP 3 033 253 B1**
(45) Date de publication et mention de la délivrance du brevet: **02.08.2017**
(21) Numéro de dépôt: 14748233.5
(22) Date de dépôt: 20.06.2014
(51) Int. Cl.: B60T 13/52, B60K 6/12, B60W 10/18, B60W 20/00

(54) **VEHICULE AUTOMOBILE COMPRENANT DES MOYENS HYDRAULIQUES DE PRODUCTION DE VIDE**
KRAFTFAHRZEUG MIT HYDRAULISCHEN MITTELN ZUR VAKUUMPRODUKTION
AUTOMOBILE VEHICLE COMPRISING HYDRAULIC MEANS FOR PRODUCING A VACUUM

(30) Priorité: 13.08.2013 FR 1357984
(43) Date de publication de la demande: 22.06.2016
(73) Titulaire: Technoboost, 75116 Paris (FR)
(72) Inventeur: HABBANI, Ridouane, F-92110 Clichy (FR)
(74) Mandataire: Rosenberg, Muriel Sylvie
(86) Numéro de dépôt international: PCT/FR2014/051540
(87) Numéro de publication internationale: WO 2015/022456

(56) Documents cités:
- WO-A1-2008/058985
- WO-A1-2012/101340
- DE-A1- 2 462 059
- US-A- 4 441 573

## Description

Le domaine de l'invention concerne un véhicule automobile hybride comprenant un dispositif de freinage à dépression.

Un dispositif de freinage à dépression est utilisé sur les véhicules automobiles pour accroitre la force de freinage exercée par le conducteur. Il permet ainsi de réduire l'effort du conducteur sur le circuit hydraulique pour ralentir le véhicule.

Un dispositif de freinage à dépression comprend une chambre à dépression reliée au collecteur d'admission du moteur thermique. La force de freinage amplifiée est produite grâce au fonctionnement tournant en régime du moteur thermique. Le papillon du collecteur d'admission est fermé empêchant ainsi l'entrée d'air atmosphérique dans le collecteur. L'air de la chambre à dépression du dispositif de freinage est pompé par le fonctionnement tournant du moteur et est fourni au moyen d'un accès entre le collecteur et la chambre à dépression du dispositif de freinage. Cet accès d'air permet de produire du vide dans la chambre à dépression lors du fonctionnement tournant du moteur et d'amplifier la force de freinage. Un tel dispositif est par exemple décrit dans la demande de brevet français FR2855483. Bien que cette solution présente l'avantage de s'affranchir d'une pompe à vide dédiée au dispositif de freinage, cette configuration est énergivore en carburant, en particulier à l'arrêt du véhicule.

WO 2008/058985 A1 révèle une installation de freinage de véhicule ainsi qu'un procédé correspondant pour des véhicules automobiles, avec un système de freinage hydraulique qui présente un transmetteur de pression hydraulique pouvant être actionné par pédale, avec un réservoir de fluide hydraulique sans pression et un maître-cylindre monté en aval, et qui est divisé par essieu en deux circuits de freinage.

On connaît une autre solution de production de vide au moyen d'une pompe à vide couplée au dispositif de freinage, en particulier lorsque le moteur est arrêté. La pompe à vide peut être autonome et alimentée électriquement. Cependant, une telle pompe à vide présente des performances inférieures et ne permet pas un freinage satisfaisant d'un point de vue de la sécurité dans toutes les situations de roulage. On connaît la demande de brevet français FR2981901 décrivant un véhicule disposant de deux générateurs de dépression.

L'inconvénient d'un tel système pour les véhicules hybrides est l'augmentation du coût de la solution de production de vide, en particulier le nombre de pompes à vide ainsi que les moyens de contrôle des générateurs de dépression.

Pour réduire ce coût, on connaît une solution de production de vide comprenant une pompe à vide pouvant être entrainée par le moteur thermique ou directement par la transmission du groupe motopropulseur. La demanderesse a déposé par le passé la demande de brevet FR2977549 décrivant un tel système de freinage. Ce système permet de s'affranchir du fonctionnement du moteur tournant mais nécessite néanmoins l'utilisation d'une pompe à vide pour les phases de faibles vitesses et d'arrêt du véhicule.

Il réside donc un besoin de proposer une solution de production de vide alternative pour les véhicules automobiles moins consommatrice en carburant, moins onéreuse et satisfaisante pour toutes les phases de roulage du véhicule.

Plus précisément, l'invention concerne un véhicule automobile comprenant un moteur thermique, un dispositif de freinage à dépression dont une chambre à dépression est reliée à un collecteur d'admission du moteur thermique permettant la production de vide dans la chambre à dépression en fonctionnement tournant du moteur, une source d'énergie hydraulique, une pompe hydraulique actionnée par la source d'énergie et une transmission mécanique entre la pompe et le moteur thermique.

Selon l'invention, la source d'énergie, la pompe et la transmission sont configurées pour entrainer le moteur thermique en fonctionnement tournant à partir de l'énergie hydraulique de sorte à produire du vide dans la chambre à dépression.

Le véhicule selon l'invention peut comprendre l'une quelconque des caractéristiques des variantes suivantes.

Selon une variante, la source d'énergie hydraulique est un accumulateur d'énergie hydraulique.

Selon une variante, la source d'énergie hydraulique est un moteur hydraulique pouvant être entrainé par un train de roues du véhicule de sorte à transformer l'énergie cinétique du véhicule en énergie hydraulique.

Selon une variante, la transmission mécanique est un train épicycloïdal.

Selon une variante, le moteur thermique est piloté en régime moteur sans injection de carburant durant la production de vide à partir de l'énergie hydraulique.

Selon une variante, le véhicule ne comprend pas de pompe à vide pour la production de vide dans la chambre à dépression.

L'invention concerne également un procédé de production de vide mis en oeuvre par un système de commande de véhicule comprenant l'une quelconque des caractéristiques des variantes décrites précédemment. Selon l'invention, le procédé comprend les étapes successives suivantes :
- requête de production de vide,
- pilotage de la source d'énergie hydraulique, la pompe et la transmission pour entrainer le moteur thermique en fonctionnement tournant à partir de l'énergie hydraulique de sorte à produire du vide dans la chambre à dépression.

Selon une variante, le procédé comprend une étape d'actionnement de la pompe par un accumulateur d'énergie hydraulique.

Selon une variante, le procédé comprend une étape de freinage récupératif par le moteur hydraulique et une étape d'actionnement de la pompe par l'énergie hydraulique générée par le moteur hydraulique.

Il est prévu aussi un programme informatique comportant des instructions lisibles par un dispositif de calcul, comportant un processeur lié à une mémoire programmable, pour commander un système de commande d'un groupe motopropulseur de véhicule automobile et appliquer l'une quelconque des variantes du procédé de production de vide décrit précédemment.

Grâce à l'invention, la production de vide dans un véhicule hybride est rendue possible sans l'intervention d'une pompe à vide. Il permet ainsi d'économiser le coût de la pompe à vide.

Par ailleurs, le procédé de production de vide dans la chambre à dépression du système de frein permet d'utiliser l'énergie hydraulique à disposition dans le véhicule au moyen de la transmission mécanique permettant d'entrainer le moteur thermique à partir de la pompe hydraulique. Ainsi, il n'est pas nécessaire d'injecter du carburant lors du fonctionnement du moteur thermique pour la production de vide.

De plus, le circuit hydraulique présente des performances de régénération bien supérieures à un circuit électrique. L'énergie hydraulique peut être exploitée directement ou indirectement pour la production de vide et réduire d'autant plus la consommation en carburant.

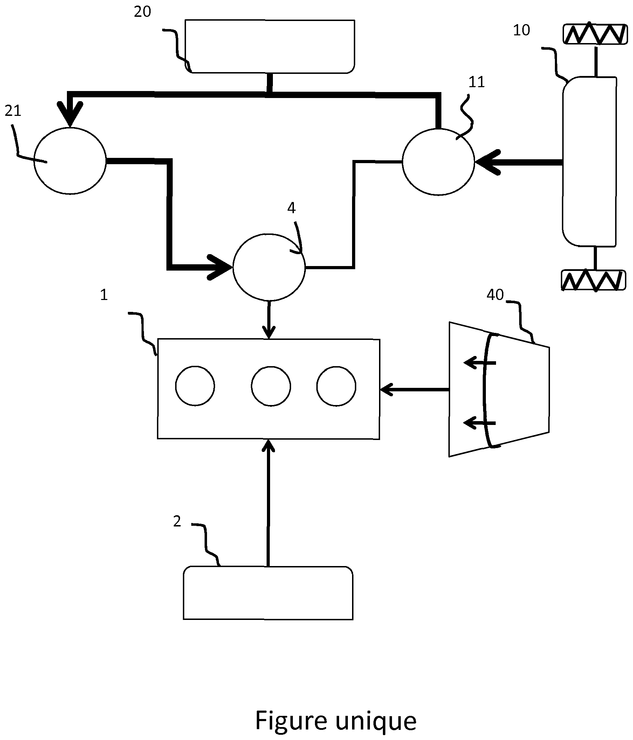

D'autres caractéristiques et avantages de la présente invention apparaîtront plus clairement à la lecture de la description détaillée qui suit de modes de réalisation de l'invention donnés à titre d'exemples nullement limitatifs et illustrés par la figure unique suivante représentant un véhicule automobile comprenant un dispositif de freinage assisté et les moyens de production de vide hydraulique.

L'invention concerne plus particulièrement les véhicules hybrides car ceux-ci disposent de plusieurs sources d'énergie que le véhicule et le procédé de production de vide permettent d'exploiter pour réaliser la dépression nécessaire au dispositif de freinage. L'invention concerne les groupes motopropulseurs à motorisation hybride à air comprimé comme il sera décrit plus précisément dans l'exemple de la description.

La figure est un schéma simplifié de l'architecture d'un groupe motopropulseur à motorisation hybride d'un véhicule automobile comprenant un moteur thermique 1 couplé à une réserve de carburant 2 et une motorisation hydraulique représentée par les composants 11, 20 et 21. Un circuit hydraulique relie la réserve 20, le moteur hydraulique 11 et la pompe hydraulique 21. Le véhicule automobile comprend également une transmission mécanique 4 et un dispositif de freinage à dépression 40. La pompe hydraulique 21 est reliée au circuit hydraulique et est couplée mécaniquement à la transmission mécanique 4. Le moteur hydraulique est relié au circuit hydraulique et est couplé mécaniquement à la transmission mécanique 4. La transmission mécanique 4 est couplée mécaniquement au moteur thermique 1 et à un train de roues 10.

La transmission mécanique 4 transmet une puissance du moteur thermique 1 vers la pompe hydraulique 21, le moteur hydraulique 11 et le train de roue 10. En outre, dans le cadre de l'invention, le répartiteur de puissance 4 permet de transmettre la puissance mécanique en chemin inverse, c'est à dire de la pompe hydraulique 21 au moteur thermique 1. Le moteur thermique 1 peut ainsi être mis en fonctionnement tournant à partir d'une énergie autre que le carburant.

Dans ce mode de réalisation le répartiteur de puissance est un train épicycloïdal. Il permet d'opérer plusieurs modes de motorisation du véhicule hybride, par exemple un premier mode dont la traction est exécutée par le moteur thermique 1, un deuxième mode dont la traction est exécutée par le moteur hydraulique 11 et un troisième mode de traction combinant le moteur thermique et le moteur hydraulique.

Dans ce mode de réalisation, le moteur thermique 1 est un moteur à essence alimenté par une réserve de carburant 2. Le moteur thermique 1 est commandé par un superviseur du groupe motopropulseur du véhicule. Le superviseur élabore les requêtes de commande du moteur thermique 1, notamment les requêtes de démarrage et arrêt du moteur et les requêtes des composants du moteur. De plus, le superviseur élabore les requêtes de consigne de couple aux roues et de consigne de régime moteur en fonction d'algorithmes de la stratégie énergétique définissant les moyens de motorisation devant intervenir dans la fourniture de couple aux roues.

Le moteur thermique 1 est configuré de sorte à pouvoir opérer une dépression dans une chambre à dépression du dispositif de freinage 40. Pour cela, le collecteur d'admission d'air est relié à la chambre à dépression du dispositif de freinage 40. Lorsque le papillon du moteur thermique 1 est fermé, ou partiellement fermé, un accès d'air peut être ouvert entre la chambre à dépression du dispositif de freinage 40 et le collecteur d'admission d'air du moteur. Ainsi, lorsque le moteur thermique est piloté en régime et est alimenté en carburant pour fournir du couple et du régime une dépression est réalisée dans le dispositif de freinage.

Le superviseur du groupe motopropulseur commande l'opération de cette dépression lorsque par exemple le conducteur du véhicule exerce un freinage. Lorsqu'une requête de production de vide est activée, le superviseur transmet et coordonne les requêtes de commande appropriées au moteur thermique 1 et au dispositif de freinage 40 pour réaliser la dépression adéquate.

Ainsi, le véhicule automobile comprend un premier moyen de production de vide dont la dépression est générée à partir de la source d'énergie de carburant 2 permettant de mettre en fonctionnement tournant le moteur thermique 1. Lorsqu'une dépression est nécessaire, le superviseur peut commander la mise en fonctionnement tournant du moteur thermique 1 grâce au carburant et d'opérer la commande du moteur thermique 1 et du dispositif de freinage 40 pour permettre la production de vide dans la chambre à dépression. Dans cette première configuration de production de vide seul le carburant est utilisé pour mettre le moteur en fonctionnement tournant. Il s'agit généralement d'un mode de fonctionnement au ralenti dans lequel le papillon du moteur thermique 1 est partiellement fermé.

Par ailleurs, le groupe motopropulseur comprend une deuxième source d'énergie hydraulique 11 et des moyens d'entraînement du moteur thermique 1. La source d'énergie est un moteur hydraulique 11 apte à être entrainé par le train 10 des roues du véhicule dans des phases de freinage récupératif. Une pompe hydraulique 21 est actionnée par l'énergie hydraulique du moteur hydraulique 11. Le fluide en sortie du moteur hydraulique 11 alimente la pompe 21 pour opérer un mouvement mécanique permettant de mettre en fonctionnement tournant le moteur thermique 1. La pompe 21 est associée mécaniquement au répartiteur de puissance 4 constituant les moyens d'entraînement du moteur thermique 1. Le train épicycloïdal assure la transmission mécanique de la puissance mécanique de la pompe hydraulique 21 vers le moteur thermique 1. Celui-ci fonctionne alors grâce au mouvement de la pompe avec un régime moteur permettant le pompage de l'air dans la chambre à dépression.

En effet, le superviseur du groupe motopropulseur peut commander le moteur hydraulique 11, la pompe hydraulique 21 et le train épicycloïdal 4 pour entrainer le moteur thermique 1 à partir de l'énergie cinétique récupérée durant une phase de récupération d'énergie. Des conditions de roulage sont surveillées, notamment des données d'accélération, de vitesse et le niveau d'énergie dans la réserve d'énergie associée 20, et cette phase de récupération d'énergie est déclenchée lorsque que les conditions sont respectées.

Ainsi, le véhicule automobile comprend un deuxième moyen de production de vide dont la dépression est générée à partir l'énergie cinétique du véhicule permettant de mettre en fonctionnement tournant le moteur thermique 1. Lorsqu'une dépression est nécessaire, le superviseur peut commander la mise en fonctionnement tournant du moteur thermique 1 grâce à l'énergie cinétique récupérée et peut opérer la commande du moteur thermique 1 et du dispositif de freinage 40 pour permettre la production de vide dans la chambre à dépression. Dans cette deuxième configuration de production de vide l'énergie cinétique est utilisée pour mettre le moteur en fonctionnement tournant avec un régime moteur assurant le pompage de l'air de la chambre à dépression. Le moteur est piloté sans injection de carburant pour sa mise en fonctionnement. Dans ce mode de fonctionnement le moteur thermique ne fournit pas de couple moteur.

Dans ce mode de réalisation, dans lequel le véhicule peut opérer un freinage récupératif, les fonctions de la stratégie énergétique définissent les lois de récupération d'énergie par les moyens de récupération d'énergie cinétique. L'énergie cinétique récupérée peut être également transformée en énergie hydraulique dans la réserve d'énergie 20 au moyen du moteur hydraulique 11. Le moteur hydraulique alimente en fluide la réserve d'énergie 20 et actionne la pompe hydraulique 21.

A L'inverse, le moteur hydraulique 11 peut à partir d'énergie emmagasinée dans la réserve d'énergie 20 transmettre du couple aux roues. Le moteur thermique 1 peut également via le répartiteur de puissance 4 transmettre une puissance mécanique au moteur hydraulique pour recharger la réserve d'énergie 20.

Le véhicule automobile également comprend une troisième source d'énergie hydraulique 20 sous la forme d'une réserve d'air comprimé pouvant actionner la pompe hydraulique 21 et le répartiteur de puissance 4. En effet, le superviseur du groupe motopropulseur peut commander la pompe hydraulique 21 et le train épicycloïdal 4 pour entrainer le moteur thermique 1 à partir de l'énergie hydraulique emmagasinée dans la réserve 20. Le fluide de la réserve 20 actionne la pompe 21 qui restitue l'énergie sous la forme d'un mouvement mécanique permettant de mettre en fonctionnement tournant le moteur thermique 1.

Ainsi, le véhicule automobile comprend un troisième moyen de production de vide dont la dépression est générée à partir de l'énergie emmagasinée dans la réserve d'air comprimée 20 permettant de mettre en fonctionnement tournant le moteur thermique 1. Lorsqu'une dépression est nécessaire, le superviseur peut commander la mise en fonctionnement tournant du moteur thermique 1 grâce à l'énergie d'air comprimée de la réserve 20 et opérer la commande du moteur thermique 1 et du dispositif de freinage 40 pour permettre la production de vide dans la chambre à dépression. Dans cette troisième configuration de production de vide l'énergie de la réserve d'air comprimée est utilisée pour mettre le moteur en fonctionnement tournant avec un régime moteur assurant le pompage de l'air de la chambre à dépression. Le moteur est piloté sans injection de carburant pour sa mise en fonctionnement. Dans ce mode de fonctionnement le moteur thermique ne fournit pas de couple moteur.

Le procédé de production de vide s'opère selon les étapes suivantes. Dans une première étape, le véhicule n'est pas dans une situation de besoin de production de vide. Lorsqu'une requête de production de vide est active dans les conditions de roulage propices à l'utilisation d'une des sources d'énergie hydraulique, alors à une étape suivante le superviseur du groupe motopropulseur commande le pilotage du moteur hydraulique 11 ou de la réserve d'énergie 20, de la pompe hydraulique 21 et du train épicycloïdal 4 pour entrainer le moteur thermique 1 en fonctionnement tournant à partir de l'énergie hydraulique de sorte à produire du vide dans la chambre à dépression.

Une première condition de roulage pour la production de vide correspond à une situation de roulage de récupération d'énergie cinétique et lorsque cette condition est détectée le superviseur déclenche la production de vide à partir de l'énergie cinétique récupérée du véhicule. Le superviseur, dans le cadre du procédé de production de vide, transmet une commande à destination du moteur hydraulique 11, de la pompe 21 et du train épicycloïdal 4 pour entrainer le moteur thermique 1 de sorte à produire du vide dans la chambre à dépression du dispositif de freinage 40. La condition de roulage est la valeur d'une consigne d'accélération, par exemple la consigne issue de la pédale d'accélération du véhicule, au regard d'un seuil d'accélération et la valeur de la vitesse du véhicule au regard d'un seuil de vitesse du véhicule.

Ainsi, si la vitesse du véhicule est supérieure à un seuil de vitesse et que le conducteur n'accélère pas alors la condition est respecté, indiquant ainsi une situation de freinage récupératif. Le superviseur commande l'entrainement du moteur à partir de cette énergie cinétique récupérée pour produire le vide. De préférence, la production de vide est autorisée à partir de la configuration récupératrice d'énergie si la réserve d'énergie 20 est pleine. Dans le cas contraire, le superviseur commande prioritairement la récupération d'énergie pour la réserve d'énergie 20.

Par ailleurs, un autre arbitrage pour déclencher la production de vide dans cette configuration est lorsque la condition de roulage est détectée et lorsque le niveau de dépression n'est pas suffisant dans la chambre à dépression.

Si la première condition de roulage n'est pas détectée alors la production de vide est opérée à partir du moteur thermique 1 entrainé uniquement par le carburant.

Une deuxième condition de roulage pour la production de vide correspond à une situation de roulage avec une vitesse non nulle et en phase d'accélération supérieure à zéro ou nulle. Lorsque cette condition est occurrente le superviseur déclenche la production de vide à partir de l'énergie emmagasinée dans la réserve d'énergie 20. Le superviseur, dans le cadre du procédé de production de vide, transmet une commande à destination de la réserve d'énergie 20, de la pompe 21 et du train épicycloïdal 4 pour entrainer le moteur thermique 1 de sorte à produire du vide dans la chambre à dépression du dispositif de freinage 40. La deuxième condition de roulage est la valeur de la vitesse du véhicule au regard d'un seuil de vitesse du véhicule, pour une phase de roulage qui n'est pas une phase de décélération.

Dans cette situation de roulage, le superviseur commande l'entrainement du moteur à partir de la réserve d'énergie 20 pour produire le vide. De préférence, la production de vide est autorisée à partir de cette configuration si la vitesse du véhicule est supérieure à un seuil de vitesse et que le niveau d'énergie dans la réserve est supérieur à un niveau d'énergie prédéterminé, considéré suffisant. Dans le cas contraire, le superviseur commande la production de vide à partir du carburant 2.

Si cette deuxième condition de roulage n'est pas détectée et qu'aucune autre condition de roulage pour déclencher la production de vide à partir d'une source d'énergie autre que le carburant n'est détectée, alors la production de vide est opérée à partir du moteur thermique 1 entrainée uniquement par le carburant.

Lorsque qu'aucune des réserves d'énergie 10, 20 n'est à disposition pour la production de vide, par exemple si le véhicule n'est pas dans une situation de freinage récupératif et que le niveau d'énergie de la réserve 20 est inférieur à un niveau de remplissage suffisant, et que le moteur thermique 1 est en fonctionnement tournant pour transmettre du couple aux roues alors le superviseur peut transmettre une commande du moteur thermique pour produire du vide au détriment de l'agrément de conduite. Si l'agrément de conduite est privilégié au procédé de production de vide, par mesure de sécurité un deuxième dispositif de freinage est alors utilisé pour opérer une phase de freinage.

En variante, l'invention concerne un véhicule automobile comprenant uniquement une des deux sources d'énergie hydraulique et le moyens d'entraînement du moteur thermique associé, les deux sources d'énergie et des moyens d'entrainement spécifiques à chaque source ou les sources hydrauliques assistées d'autres types de sources pour entrainer le moteur thermique sans consommation de carburant.

Les fonctions de calcul et de commande du groupe motopropulseur pour la mise en oeuvre des étapes du procédé de production de vide sont exécutées par un programme informatique mémorisé dans un circuit intégré à mémoire programmable du groupe motopropulseur, mémoire réinscriptible ou non effaçable. Il s'agit généralement du superviseur du groupe motopropulseur comprenant un dispositif de calcul à microprocesseur associé à une mémoire programmable.

## Revendications

1. Véhicule automobile comprenant un moteur thermique (1), un dispositif de freinage à dépression (40) dont une chambre à dépression est reliée à un collecteur d'admission du moteur thermique permettant la production de vide dans la chambre à dépression en fonctionnement tournant du moteur, une source d'énergie hydraulique (20 ;11), une pompe hydraulique (21) actionnée par la source d'énergie (20 ;11) et une transmission mécanique (4) entre la pompe (21) et le moteur thermique (1), **caractérisé en ce que** la source d'énergie, la pompe et la transmission sont configurées pour entrainer le moteur thermique en fonctionnement tournant à partir de l'énergie hydraulique de sorte à produire du vide dans la chambre à dépression et **en ce que** le moteur thermique (1) est piloté en régime moteur sans injection de carburant durant la production de vide à partir de l'énergie hydraulique.

2. Véhicule selon la revendication 1, **caractérisé en ce que** la source d'énergie hydraulique est un accumulateur d'énergie hydraulique (20).

3. Véhicule selon la revendication 1, **caractérisé en ce que** la source d'énergie hydraulique est un moteur hydraulique (11) pouvant être entrainé par un train de roues du véhicule de sorte à transformer l'énergie cinétique du véhicule en énergie hydraulique.

4. Véhicule selon l'une quelconque des revendications précédentes, **caractérisé en ce que** la transmission mécanique (4) est un train épicycloïdal.

5. Véhicule selon l'une quelconque des revendications précédentes, **caractérisé en ce qu'**il ne comprend pas de pompe à vide pour la production de vide dans la chambre à dépression.

6. Procédé de production de vide mis en oeuvre par un système de commande de véhicule selon l'une quelconque des revendications précédentes, **caractérisé en ce qu'**il comprend les étapes successives suivantes :
- requête de production de vide,
- pilotage de la source d'énergie hydraulique (11 ;20),
la pompe (21) et la transmission (4) pour entrainer le moteur thermique (1) en fonctionnement tournant à partir de l'énergie hydraulique de sorte à produire du vide dans la chambre à dépression.

7. Procédé selon la revendication 6, **caractérisé en ce qu'**il comprend une étape d'actionnement de la pompe (21) par un accumulateur d'énergie hydraulique (20).

8. Procédé selon la revendication 6, **caractérisé en ce qu'**il comprend une étape de freinage récupératif par le moteur hydraulique (11) et une étape d'actionnement de la pompe (21) par l'énergie hydraulique générée par le moteur hydraulique (11).

9. Programme informatique comportant des instructions lisibles par un dispositif de calcul, comportant un processeur lié à une mémoire programmable, pour commander un système de commande d'un groupe motopropulseur de véhicule automobile et appliquer le procédé de production de vide selon l'une quelconque des revendications 6 à 8.

## Patentansprüche

1. Kraftfahrzeug, das eine Brennkraftmaschine (1) und eine Unterdruckbremsvorrichtung (40) umfasst, von der eine Unterdruckkammer mit einem Saugrohr der Brennkraftmaschine verbunden ist, die die Vakuumproduktion in der Unterdruckkammer beim drehenden Betrieb des Motors erlaubt, eine Quelle hydraulischer Energie (20; 11), eine Hydraulikpumpe (21), die von der Energiequelle (20; 11) betätigt wird, und ein mechanisches Getriebe (4) zwischen der Pumpe (21) und der Brennkraftmaschine (1), **dadurch gekennzeichnet, dass** die Energiequelle, die Pumpe und das Getriebe konfiguriert sind, um die Brennkraftmaschine in Drehbetrieb ausgehend von der hydraulischen Energie derart anzutreiben, dass Vakuum in der Unterdruckkammer erzeugt wird, und dass die Bremskraftmaschine (1) ohne Einspritzen von Kraftstoff während der Vakuumerzeugung ausgehend von der hydraulischen Energie drehzahlgesteuert wird.

2. Fahrzeug nach Anspruch 1, **dadurch gekennzeichnet, dass** die Quelle hydraulischer Energie ein Speicher (20) hydraulischer Energie ist.

3. Fahrzeug nach Anspruch 1, **dadurch gekennzeichnet, dass** die Quelle hydraulischer Energie ein Hydraulikmotor (11) ist, der von einem Fahrwerk des Fahrzeugs derart angetrieben werden kann, dass die kinetische Energie des Fahrzeugs in hydraulische Energie umgewandelt wird.

4. Fahrzeug nach einem der vorhergehenden Ansprüche, **dadurch gekennzeichnet, dass** das mechanische Getriebe (4) ein Umlaufgetriebezug ist.

5. Fahrzeug nach einem der vorhergehenden Ansprüche, **dadurch gekennzeichnet, dass** es keine Vakuumpumpe für die Vakuumerzeugung in der Unterdruckkammer umfasst.

6. Verfahren zur Vakuumerzeugung, das von einem Fahrzeugsteuersystem nach einem der vorhergehenden Ansprüche umgesetzt wird, **dadurch gekennzeichnet, dass** es die folgenden aufeinanderfolgenden Schritte umfasst:
- Vakuumerzeugungsanfrage,
- Steuern der Quelle hydraulischer Energie (11; 20), der Pumpe (21) und des Getriebes (4), um die Brennkraftmaschine (1) in Drehbetrieb ausgehend von der hydraulischen Energie derart anzutreiben, dass Vakuum in der Unterdruckkammer erzeugt wird.

7. Verfahren nach Anspruch 6, **dadurch gekennzeichnet, dass** es einen Schritt des Betätigens der Pumpe (21) durch einen Speicher hydraulischer Energie (20) umfasst.

8. Verfahren nach Anspruch 6, **dadurch gekennzeichnet, dass** es einen Schritt der Nutzbremsung durch den hydraulischen Motor (11) und einen Schritt des Betätigens der Pumpe (21) durch die hydraulische Energie, die von dem hydraulischen Motor (11) erzeugt wird, umfasst.

9. Computerprogramm, das Anweisungen umfasst, die von einer Rechenvorrichtung gelesen werden können, die einen Prozessor umfasst, der mit einem programmierbaren Speicher verbunden ist, um ein Steuersystem eines Kraftfahrzeug-Antriebsaggregats zu steuern und das Vakuumerzeugungsverfahren nach einem der Ansprüche 6 bis 8 anzuwenden.

## Claims

1. A motor vehicle comprising a heat engine (1), a vacuum braking device (40), a vacuum chamber of which is connected to an intake manifold of the heat engine, permitting the production of a vacuum in the vacuum chamber in the running operation of the engine, a source of hydraulic energy (20; 11), a hydraulic pump (21) actuated by the energy source (20; 11), and a mechanical transmission (4) between the pump (21) and the heat engine (1), **characterized in that** the energy source, the pump and the transmission are configured to drive the heat engine in running operation from the hydraulic energy so as to produce a vacuum in the vacuum chamber and **in that** the heat engine (1) is driven at engine speed without injection of fuel during the production of vacuum from the hydraulic energy.

2. The vehicle according to Claim 1, **characterized in that** the hydraulic energy source is a hydraulic energy accumulator (20).

3. The vehicle according to Claim 1, **characterized in that** the hydraulic energy source is a hydraulic motor (11) being able to be driven by a wheel set of the vehicle so as to transform the kinetic energy of the vehicle into hydraulic energy.

4. The vehicle according to any one of the preceding claims, **characterized in that** the mechanical transmission (4) is an epicyclic train.

5. The vehicle according to any one of the preceding claims, **characterized in that** it does not include a vacuum pump for the production of vacuum in the vacuum chamber.

6. A method for producing a vacuum, implemented by a vehicle control system according to any one of the preceding claims, **characterized in that** it includes the following successive steps:
- request for production of a vacuum,
- driving of the hydraulic energy source (11; 20), the pump (21) and the transmission (4) for driving the heat engine (1) in running operation from the hydraulic energy so as to produce a vacuum in the vacuum chamber.

7. The method according to Claim 6, **characterized in that** it includes a step of actuation of the pump (21) by a hydraulic energy accumulator (20).

8. The method according to Claim 6, **characterized in that** it includes a recuperative braking step by the hydraulic motor (11) and a step of actuation of the pump (21) by the hydraulic energy generated by the hydraulic motor (11).

9. A computer program comprising instructions readable by a calculation device, comprising a processor linked to a programmable memory, for controlling a control system of a power train of a motor vehicle and applying the method for producing a vacuum according to any one of Claims 6 to 8.
